# EUROPÄISCHE PATENTSCHRIFT

(11) **EP 1 354 392 B1**
(45) Veröffentlichungstag und Bekanntmachung des Hinweises auf die Patenterteilung: **26.05.2004**
(21) Anmeldenummer: 02700151.0
(22) Anmeldetag: 14.01.2002
(51) Int. Cl.: H02K 1/20

(54) **WELLSCHLAUCH-STÄNDERKÜHLUNG IN EINER ELEKTRISCHEN MASCHINE**
COOLING OF STATOR BY CORRUGATED HOSE IN AN ELECTRIC MACHINE
REFROIDISSEMENT DE STATOR PAR TUYAU ONDULE FLEXIBLE SUR UNE MACHINE ELECTRIQUE

(30) Priorität: 25.01.2001 DE 10103447
(43) Veröffentlichungstag der Anmeldung: 22.10.2003
(73) Patentinhaber: BAUMÜLLER NÜRNBERG GMBH, D-90482 Nürnberg (DE)
(72) Erfinder: NIMZ, Detlef, 02977 Hoyerswerda (DE); MEISTER, Rudolf, 90596 Schwanstetten (DE)
(74) Vertreter: Götz, Georg, Dipl.-Ing.
(86) Internationale Anmeldenummer: PCT/DE2002/000086
(87) Internationale Veröffentlichungsnummer: WO 2002/060036

(56) Entgegenhaltungen:
- EP-A- 0 967 708
- DE-C- 19 742 255
- DE-C- 19 749 108
- US-A- 3 014 139

## Beschreibung

Die Erfindung betrifft einen gekühlten Ständer für eine elektrische Maschine mit rotierendem Läufer oder für einen elektrischen Linearmotor. Dabei ist der Ständer jeweils mit einem Elektro-Blechpaket gebildet und weist einen oder mehrere flexibel verformbare, auf das Blechpaket einwirkende Kühl-Kanäle für strömendes Kühlmedium auf.

In DE 197 42 255 C1 ist eine gehäuselose Drehstrommaschine mit achsparalleien Kühlmittelrohren im Ständerblechpaket offenbart. Da die Kühlmittelrohre steif ausgeführt sind, können sich bei deren Einschieben in Bohrungen des Ständerblechpakets Schwierigkeiten ergeben, vor allem wenn gebogene Verläufe vorhanden sind. Insbesondere ist es notwendig, die Kühl-Kanäle mehrstückig aus unterschiedlichen Rohrabschnitten mit Umlenkbögen, Eckverbindungsbögen und dergleichen umständlich zusammenzusetzen.

Aus der Patentveröffentlichung EP 0 829 946 A1 ist ein flüssigkeitsdurchströmter Kühlmantel für eine elektrische Maschine bekannt. Als Kühlmantel wird ein enganliegendes, schlauchförmiges Gebilde vorgeschlagen, das flexibel und elastisch ist und aus Gummi oder Silikon besteht. Dieser Kühl-"Sack"/Schlauch ist nicht nur flexibel, sondern auch in beträchtlichem Maße dehnbar. Aus diesem Grund kann sich dieser Kühlmantel an den unterschiedlichst gestalteten Oberflächen von Ständer-Blechpaketen eng anschmiegen. Da aber gemäß dem bekannten Vorschlag der Kühlmantel in allen Richtungen dehnbar und zusammendrückbar ist, ist es schwierig, diesen in schmale, achsparallele oder radiale Bohrungen eines Blechpakets einzuführen. Auch hier ist also die Montage der Kühleinrichtung im Ständer-Blechpaket problematisch.

Aus "DEPANET - Bibliographische Daten" ist eine kurze Zusammenfassung zu einer chinesischen Patentanmeldung CN 1 264 207 bekannt, wonach gewellte Rohre in der Kühleinrichtung eines elektrischen Motors einsetzbar sind. Eine genauere Struktur oder konstruktive Einzelheiten zur Anordnung des gewellten Rohres sind aus dieser Fundstelle aber nicht entnehmbar.

Der Erfindung liegt die Aufgabe zugrunde, einen gekühlten Ständer zu schaffen, der eine rasche und leichte Montage der Kühleinrichtung ermöglicht.

Zur Lösung wird bei einem Ständer mit den eingangs genannten Merkmalen erfindungsgemäß vorgeschlagen, dass der eine oder die mehreren Kühl-Kanäle mit einem bzw. mehreren biegsamen Weilschläuchen aus Metall gebildet sind. Diese an sich bekannten, flexiblen Fluidleitungen (vgl. "Handbuch der Metallschläuche" Labhard-Verlag Konstanz 1999/Witzenmann GmbH, Pforzheim) zeichnen sich dadurch aus, dass sie im wesentlichen nur Bewegungen bzw. Biegungen quer zur Längsachse zulassen, in Längsrichtung jedoch nicht stauchbar sind bzw. keine Bewegungen aufnehmen können. In der europäischen Patentschrift EP 0 035 071 B1 ist bereits der Einsatz von derartigen Wellrohren bzw. -schläuchen im Elektromaschinenbau bekannt, allerdings nur im Zusammenhang mit einem wassergekühlten Rotor, und dort als flexibles Zwischenglied zwischen einer wickelkopfseitigen Anschlußarmatur und einer Wasserverteilkammer.

Mit der Erfindung wird bei der Montage der Kühlmittel im Ständer die axiale Steifigkeit von Wellschläuchen bzw. -rohren vorteilhaft dazu ausgenutzt, diese in Ausnehmungen, Nuten oder Bohrungen des Ständerblechpakets schnell einschieben zu können. Wegen der flexiblen Biegbarkeit können sich die Wellschläuche an unterschiedlichste Verläufe der Kühlkanäle schnell anpassen. Aufgrund der axialen Steifigkeit lassen sie sich leicht durch die Kühl-Bohrungen im Ständerblechpaket einfädeln und einschieben. Ein weiterer, mit der Erfindung erzielter Vorteil besteht darin, dass aufgrund der vielfach gewellten Innenwandung des Wellschlauches eine erhöhte Verwirbelung des darin strömenden Kühlmediums stattfindet, was wiederum den Wärmeaustausch und die Wärmeabfuhr erhöht.

Nach einer besonderen Ausbildung der Erfindung werden am Ständer-Blechpaket vorhandene Wicklungsnuten als Führungsaufnahmen für die Wellschläuche ausgenutzt. Damit wird der Vorteil erzielt, dass die Wellschläuche bzw. das diese durchströmende Fluid (Kühlflüssigkeit oder Luft) nicht nur das Elektro- bzw. Dynamoblech des Ständers, sondern auch dessen stromführende Wicklungen bzw. Leiter kühlen.

Aufgrund ihrer Biegbarkeit lassen sich die Wellschläuche um Ecken, Kanten, Stirnseiten oder dergleichen des Ständers führen und an ihren Enden dabei festziehen. Somit eröffnet sich eine vorteilhafte Ausbildung der Erfindung dahingehend, dass der oder die Wellschläuche im Blechpaket des Ständers unter Zugspannung verlegt werden, was einerseits die mechanische Festigkeit und den Zusammenhalt des Ständers erhöht und andererseits zu einem verstärkten Kontakt zwischen Kühl-Wellschlauch und Ständerteilen führt.

Zweckmäßig wird ein Wellschlauch aus temperaturbeständigem, gut wärmeleitenden und biegsamen Material verwendet, wobei auch kleine Biegeradien ermöglicht sind. Als besonders geeignet erweist sich ein Wellschlauch aus Edelstahl.

Zur Erhöhung der Effektivität der Wärmeübertragung zwischen Kühlkanal und Ständer-Blechpaket ist es zweckmäßig, den oder die Wellschläuche in für die Kühlkanäle vorgesehenen Bohrungen im Blechpaket zu verlegen. Zur weiteren Erhöhung der Wärmeleitfähigkeit können nach einer vorteilhaften Ausbildung der Erfindung die zum Einziehen des Wellschlauches benötigten Bohrungen mit gut wärmeleitenden Materialien (z. B. Aluminium, Lötzinn, usw.) ausgegossen werden. Auch Zink, Blei oder Kunststoff sind als Gießmaterialien wegen ihrer gut wärmeleitenden Eigenschaften verwendbar.

Das Vergießen mit wärmeleitendem Material eignet sich auch für in Wicklungsnuten venegte Wellschläuche. Soll aber ein unmittelbarer Kontakt des Wellschlauches mit der Wicklung z. B. aus Gründen der Sicherheit und Zuverlässigkeit vermieden werden, ist das Verlegen in den Bohrungen zweckmäßiger. Solchenfalls können auch größere Durchmesser für die Wellschläuche realisiert werden. Die Bohrungen für die Wellschläuche können axial, achsparallel, radial und grundsätzlich in jedem denkbaren Winkel zur Mittel - oder Drehachse und mit jeder Biegung entsprechend dem kleinstmöglichen Biegeradius des Wellschlauches verlaufen.

Im Rahmen der allgemeinen erfinderischen Idee ist der Einsatz der erfindungsgemäßen Ständer-Kühleinrichtung sowohl bei elektrischen Linearmotoren als auch bei allen bekannten, elektrischen Rotationsmotoren unterschiedlicher Bauformen möglich. Als Kühlmedium eignen sich Luft, Wasser und alle sonstigen, zur Kühlung bekannten Medien. Stets führt der erfindurigsgemäße Einsatz des Wellschlauches zu einer sehr guten Montierbarkeit und einer daraus folgenden, erheblichen Zeitersparnis. Mittels an sich bekannter Anschlußelemente wie Stecknippel, Schlauchkupplungen, Adapter und dergleichen läßt sich das Wellschlauch-Ende der Ständerkühlung an externe Kühlfluid-Kreisläufe und -versorgungseinrichtungen anschließen.

Dazu trägt auch eine vorteilhafte Ausbildung der Erfindung bei, wonach im Falle elektrischer Rotationsmotoren die Wellschläuche im Bereich von Ständerstirnseiten oder etwa anzubringender Lagerschilde so verlegt und/oder gebogen sind, dass mäanderartig verlaufende Windungen entstehen. Die damit verbundene Kurvenbildung für den Kühlmedium-Strömungsverlauf fördert die genannte Verwirbelung. Dem entspricht im Falle elektrischer Linearmotoren eine Erfindungsausbildung, bei der eine Mehrzahl parallel und quer zur Ständer-Längsrichtung verlaufender Wellschläuche oder Wellschlauch-Abschnitte durch gebogene Abschnitte miteinander verbunden sind.

Weitere Einzelheiten, Vorteile und Wirkungen auf der Basis der Erfindung ergeben sich aus der nachfolgenden Beschreibung bevorzugter Ausführungswege der Erfindung und aus den Zeichnungen. Diese zeigen in:
- Figur 1: einen erfindungsgemäßen Ständer im Längsschnitt mit strichpunktiert angedeuteten Wellschläuchen als Kühlkanäle,
- Figur 2: eine erste Stirnansicht auf den Ständer gemäß Figur 1,
- Figur 3: eine zweite, teilweise Stirnansicht auf den Ständer gemäß Figur 1,
- Figur 4: eine schematische Längsansicht auf den Ständer eines Linearmotors, und
- Figur 5: eine Schnittdarstellung gemäß V-V in Figur 4.

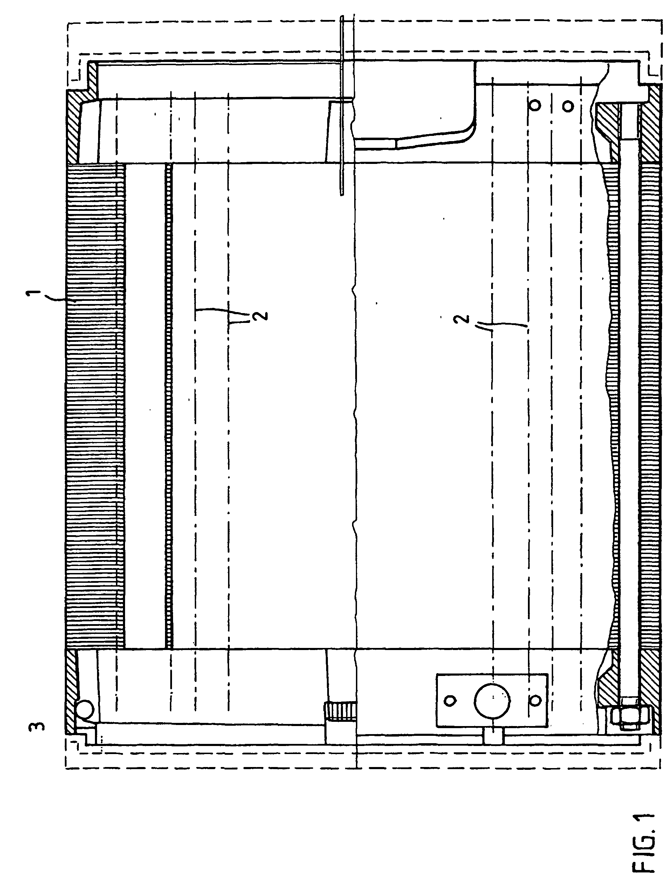

Der in Figur 1 dargestellte Ständer ist mit einem Elektro-Blechpaket 1 gebaut und von (strichpunktiert angedeuteten) achsparallelen Abschnitten 2 der mittels eines Wellschlauchs 3 realisierten Kühlkanäle durchsetzt. Im gezeichneten Ausführungsbeispiel gemäß Figuren 1-3 ist ein einziger bzw. einstückiger Wellschlauch 3 zur Realisierung der Kühlkanäle eingesetzt. Natürlich liegt es auch im Rahmen der Erfindung, die Kühlkanäle bzw. das Kühlkanalsystem des Ständers mehrstückig mit einer Mehrzahl von Wellschläuchen zu realisieren.

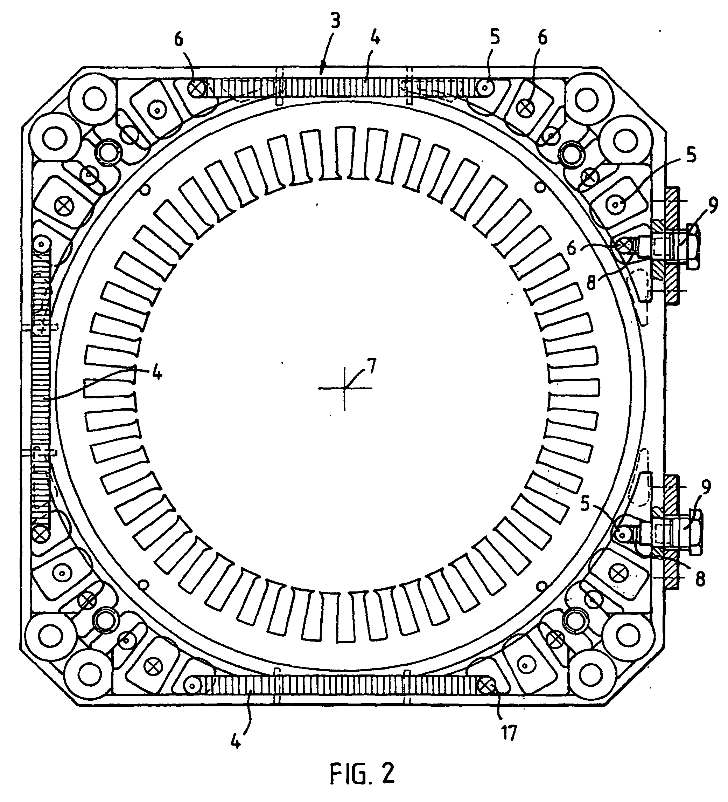

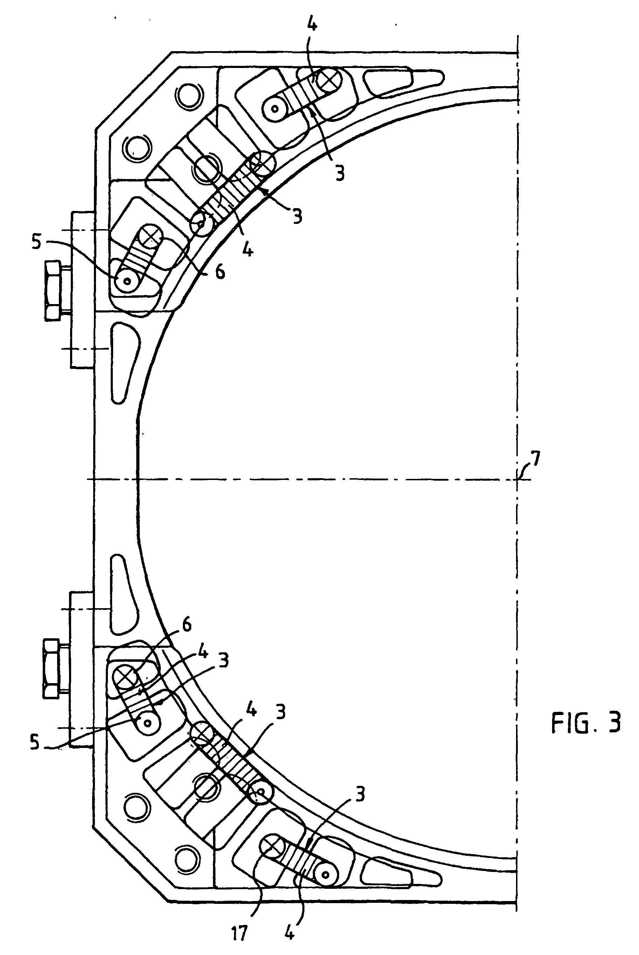

Gemäß Figur 2 und 3 ist an den jeweiligen Stirnseiten des Ständers der Wellschlauch an unterschiedlichen Ein- und Austrittsstellen 6, 5 um 180° umgebogen, so dass stirnseitige Wellschlauch-Umlenkbögen 4 entstehen. Die Umlenkung ist verdeutlicht durch jeweilige aus der Zeichenebene herausführende Austrittsstellen 5 und in die Zeichenebene tauchende Eintrittsstellen 6. Hierdurch ergibt sich für den Wellschlauch 3 ein sich in Ständer-Umfangsrichtung um die Drehachse 7 fortsetzender, mäanderartiger Verlauf, welcher die Verwirbelung des im Wellschlauch 3 strömenden Kühlmediums verstärkt.

Gemäß Figur 2 bilden kurze Querabschnitte 8 des Wellschlauchs 3 die beiden Schlauchenden und münden jeweils in ein Anschluß-Schraubteil 9 für die Zufuhr und den Abfluß von Kühlmedium.

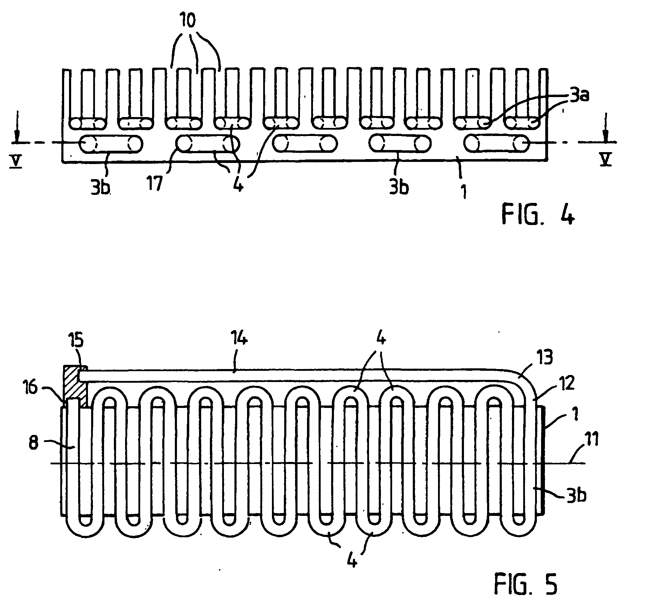

In Figur 4 und 5 ist die Kühlung eines elektrischen Linearmotors in Einfachkammausführung mittels zweier separater Wellschläuche 3a, 3b vorgenommen. Der erste Wellschlauch 3a ist direkt in den Wicklungsnuten 10 verlegt und verläuft über Umlenkbögen 4 jeweils zur nächsten Wicklungsnut 10. Der zweite Wellschlauch 3b verläuft - ähnlich wie beim Ausführungsbeispiel nach Figur 1-3 - direkt in Bohrungen 17 des Blechpakets 1, und zwar über gleichmäßige Windungen mäanderförmig in Richtung der Ständer-Längsachse 11. Die Mäander-Windungen sind wiederum mittels einer Mehrzahl Umlenkbögen 4 gebildet, die beim Ausführungsbeispiel nach Figur 4 und 5 entlang der Ständer-Längsachse 11 hintereinander alternierend zu beiden Längsachsen des Blechpakets 1 austreten. Die letzte Austrittsstelle 12 ist über einen Rückführungsbogen 13 und einen linearen Längsabschnitt 14 des Wellschlauches 3b mit einem Verbindungsadapter 15 verbunden, von dem auch der Wellschlauchanfang 16 ausgeht. Mit dem Verbindungsadapter 15 kann auch der erstgenannte Wellschlauch 3a des Linearmotors mit seinem Ein- und Ausgangsende gekuppelt sein, wobei beispielsweise die beiden Wellschläuche 3a, 3b parallel mit derselben Quelle für Kühlmedium verbunden sein können.

Sowohl beim Ständer für den Rotationsmotor nach Figuren 1-3 als auch für den elektrischen Linearmotor nach Figuren 4 und 5 ist es zweckmäßig, etwaige Zwischenräume zwischen dem im Blechpaket 1 verlegten Wellschlauch 3, 3a und dem Blechpaket selbst innerhalb der Bohrung mittels wärmeleitenden Materials auszugießen.

### Bezugszeichenliste

- 1: Blechpaket
- 2: achsparalleler Abschnitt
- 3, 3a, 3b: Wellschlauch
- 4: Umlenkbögen
- 5: Austrittsstelle
- 6: Eintrittsstelle
- 7: Drehachse
- 8: Querabschnitt
- 9: Anschlußschraubteil
- 10: Wicklungsnut
- 11: Ständer-Längsachse
- 12: letzte Austrittsstelle
- 13: Rückführungsbogen
- 14: Längsabschnitt
- 15: Verbindungsadapter
- 16: Wellschlauchanfang
- 17: Bohrung

## Patentansprüche

1. Gekühlter Ständer für eine elektrische Maschine mit rotierendem Läufer, welcher Ständer mit einem Elektro-Blechpaket (1) gebildet ist und einen oder mehrere flexibel verformbare, auf das Blechpaket (1) einwirkende Kühl-Kanäle für strömendes Kühlmedium in flüssigem oder gasförmigem Zustand aufweist, **dadurch gekennzeichnet, dass** der eine oder die mehreren Kühl-Kanäle mit einem beziehungsweise mehreren biegsamen Wellschläuchen (3) aus Metall gebildet sind.

2. Gekühlter Ständer für einen elektrischen Linearmotor, welcher mit einem Elektro-Blechpaket (1) gebildet ist und einen oder mehrere flexibel verformbare, auf das Blechpaket (1) einwirkende Kühl-Kanäle für strömendes Kühlmedium aufweist, **dadurch gekennzeichnet, dass** der eine oder die mehreren Kühl-Kanäle mit einem beziehungsweise mehreren biegsamen Wellschläuchen (3a.3b) aus Metall gebildet sind.

3. Ständer nach Anspruch 1 oder 2, wobei am Blechpaket (1) Wicklungsnuten (10) ausgebildet sind, **dadurch gekennzeichnet, dass** der oder die Wellschläuche (3a) in den Wicklungsnuten (10) verlegt sind und dabei in Kontakt mit elektrisch stromführenden Wicklungsteilen stehen.

4. Ständer nach einem der vorangehenden Ansprüche, **dadurch gekennzeichnet, dass** der oder die Wellschläuche (3,3a,3b) im Blechpaket (1) unter Zugspannung verlegt sind.

5. Ständer nach einem der vorangehenden Ansprüche, mit einer oder mehreren Bohrungen (17) im Blechpaket zur (1) Bildung der Kühl-Kanäle, **dadurch gekennzeichnet, dass** der oder die Wellschläuche (3,3b) in der beziehungsweise den Bohrungen (17) verlegt sind.

6. Ständer nach einem der vorangehenden Ansprüche, **dadurch gekennzeichnet, dass** der oder die Wellschläuche (3,3a,3b) durch Vergießen mit wärmeleitendem Material am Blechpaket (1) befestigt sind.

7. Ständer nach Ansprüche 5 und 6, **dadurch gekennzeichnet, dass** zum Vergießen Kunststoff, Aluminium, Zinn, Blei, Zink oder eine Legierung mit Aluminium und/oder Zink Verwendet ist.

8. Ständer nach einem der vorangehenden Ansprüche, ausgenommen Anspruch 2, **dadurch gekennzeichnet, dass** der oder die Wellschläuche (3) zumindest abschnittsweise (2) parallel zur Rotationsachse (7) verlaufend verlegt sind.

9. Ständer nach Anspruch 8, **dadurch gekennzeichnet, dass** der oder die Wellschläuche (3) im Bereich von Ständerstimseiten oder etwa anzubringender Lagerschilde zur Bildung mäanderartig verlaufender Windungen (4) verlegt und/oder gebogen sind.

10. Ständer nach einem der vorangehenden Ansprüche, ausgenommen Ansprüche 1, 8 und 9, **gekennzeichnet durch** eine Mehrzahl parallel und quer zur Ständer-Längsrichtung (11) verlaufender Wellschläuche (3a,3b) oder parallel und quer zur Ständer-Längsrichtung (11) verlaufender Abschnitte eines einzigen Wellschlauches (3a,3b).

11. Ständer nach Anspruch 10, **gekennzeichnet durch** einen in Ständer-Längsrichtung (11) mäanderartigen Verlauf des einzigen Wellschlauches (3b), wobei die Quer-Abschnitte (8) **durch** gebogene Abschnitte miteinander verbunden sind.

## Claims

1. Cooled stator for an electric machine with a rotating rotor, which stator is formed with a magnetic laminated core (1) and comprises one or more flexibly deformable cooling channels, which act on the laminated core (1), for flowing cooling medium in a liquid or gaseous state, **characterised in that** the one or the plurality of cooling channels is/are formed with one or a plurality of flexible corrugated metal hose (3).

2. Cooled stator for an electric linear motor which is formed with a magnetic laminated core (1) and comprises one or more flexibly deformable cooling channels, which act on the laminated core (1), for flowing cooling medium, **characterised in that** the one or the plurality of cooling channels is/are formed with one or a plurality of flexible corrugated metal hose (3a, 3b).

3. Stator according to Claim 1 or 2, wherein winding slots (10) are provided at the stator laminated core (1), **characterised in that** the corrugated hose (3a) is or are laid in the winding slots (10) and are in contact with electrically conducting winding parts.

4. Stator according to any one of the preceding Claims, **characterised in that** the corrugated hose (3, 3a, 3b) is or are laid in the laminated core (1) under tensile stress.

5. Stator according to any one of the preceding Claims, with one or a plurality of bore(s) 17 in the laminated core (1) to form the cooling channels, **characterised in that** the corrugated hose (3, 3b) is or are laid in the bore(s) 17.

6. Stator according to any one of the preceding Claims, **characterised in that** the corrugated hose (3, 3a, 3b) is or are secured to the laminated core (1) by casting with a heat-conductive material.

7. Stator according to Claims 5 and 6, **characterised in that** a plastics material, aluminium, tin, lead, zinc or an alloy with aluminium and/or zinc is used for casting.

8. Stator according to any one of the preceding Claims, excepting Claim 2, **characterised in that** the corrugated hose (3) is or are laid parallel to the rotational axis (7), at least in portions (2).

9. Stator according to Claim 8, **characterised in that** the corrugated hose (3) is or are laid and/or bent in the region of stator front sides or any end shields which are to be attached in order to form windings (4) extending in meander-like fashion.

10. Stator according to any one of the preceding Claims, excepting Claims 1, 8 and 9, **characterised by** a plurality of corrugated hose (3a, 3b) extending parallel and transversely to the stator longitudinal direction (11) or portions of a single corrugated hose (3a, 3b) extending parallel and transversely to the stator longitudinal direction (11).

11. Stator according to Claim 10, **characterised by** a meander-like path of the single corrugated hose (3b), wherein the transverse portions (8) are connected together by bent portions.

## Revendications

1. Stator refroidi pour une machine électrique à rotor tournant, lequel stator est formé avec un paquet de tôles électriques (1) et présente un ou plusieurs canaux de refroidissement déformables en flexion pour du fluide de refroidissement en écoulement à l'état liquide ou gazeux, agissant sur le paquet de tôles (1), **caractérisé en ce que** le ou les canaux de refroidissement sont formés avec un ou plusieurs tuyaux ondulés (3) flexibles en métal.

2. Stator refroidi pour un moteur linéaire électrique, lequel est formé avec un paquet de tôles électriques (1) et présente un ou plusieurs canaux de refroidissement déformables en flexion pour du fluide de refroidissement en écoulement, agissant sur le paquet de tôles (1), **caractérisé en ce que** le ou les canaux de refroidissement sont formés avec un ou plusieurs tuyaux ondulés (3a, 3b) flexibles en métal.

3. Stator selon la revendication 1 ou 2, dans lequel sur le paquet de tôles (1) sont réalisées des rainures de bobinage (10), **caractérisé en ce que** le ou les tuyaux ondulés (3a) sont posés dans les rainures de bobinage (10) et ainsi sont en contact électrique avec des parties de bobinage conductrices d'électricité.

4. Stator selon l'une des revendications précédentes, **caractérisé en ce que** le ou les tuyaux ondulés (3, 3a, 3b) sont posés dans le paquet de tôles (1) sous contrainte de traction.

5. Stator selon l'une des revendications précédentes, présentant un ou plusieurs perçages (17) dans le paquet de tôles (1) pour former les canaux de refroidissement, **caractérisé en ce que** le ou les tuyaux ondulés (3, 3b) sont posés dans le ou les perçages (17).

6. Stator selon l'une des revendications précédentes, **caractérisé en ce que** le ou les tuyaux ondulés (3, 3a, 3b), sont fixés sur le paquet de tôles (1) par coulée avec du matériau conducteur de la chaleur.

7. Stator selon les revendications 5 et 6, **caractérisé en ce que** pour la coulée est utilisée de la matière plastique, de l'aluminium, de l'étain, du plomb, du zinc ou un alliage d'aluminium et/ou de zinc.

8. Stator selon l'une des revendications précédentes, excepté la revendication 2, **caractérisé en ce que** le ou les tuyaux ondulés sont posés en s'étendant au moins par portions (2) parallèlement à l'axe de rotation (7).

9. Stator selon la revendication 8, **caractérisé en ce que** le ou les tuyaux ondulés (3) dans la zone des faces frontales du stator ou de flasques à mettre en place éventuellement sont déplacés et/ou coudés pour former des spires s'étendant à la manière de méandres.

10. Stator selon l'une des revendications précédentes, excepté les revendications 1, 8 et 9, **caractérisé par** une pluralité de tuyaux ondulés (3a, 3b) s'étendant parallèlement et transversalement à la direction longitudinale (11) du stator ou par des sections d'un tuyau ondulé unique (3a, 3b) s'étendant parallèlement et transversalement à la direction longitudinale (11) du stator.

11. Stator selon la revendication 10, **caractérisé par** un parcours en méandres du tuyau ondulé unique (3b) dans la direction longitudinale (11) du stator, les sections transversales (8) étant reliées les unes aux autres par des sections coudées.
